# EUROPEAN PATENT APPLICATION

(11) **EP 4 643 713 A1**
(43) Date of publication of application: **05.11.2025**
(21) Application number: 23910726.1
(22) Date of filing: 27.12.2023
(51) Int. Cl.: A47C 27/12

(54) **MULTILAYER COMFORTABLE AIR FIBER STRUCTURE AND PREPARATION METHOD THEREFOR, AND SEAT CUSHION, BACKREST AND SEAT PREPARED THEREFROM**

(30) Priority: 29.12.2022 CN 202211713790
(71) Applicant: Yanfeng International Automotive Technology Co., Ltd., Shanghai 201306 (CN)
(72) Inventor: JIANG, Minjie, Shanghai 201306 (CN); CHU, Yeqian, Shanghai 201306 (CN); SUN, Jie, Shanghai 201306 (CN); HU, Chenglong, Shanghai 201306 (CN); XIONG, Yongtao, Shanghai 201306 (CN)
(74) Representative: Colombo, Stefano Paolo
(86) International application number: PCT/CN2023/142360
(87) International publication number: WO 2024/140807

(57) **Abstract**

The multi-layer comfortable air fiber structure disclosed in the present invention comprises a comfortable upper layer and a supportive lower layer, wherein the comfortable upper layer and the supportive lower layer are respectively prepared by hot pressing single-layer air fiber sheets formed from air fibers with different spinning directions, and a bottom surface of the comfortable upper layer is mechanically connected with an upper surface of the supportive lower layer. The present invention also discloses a preparation method for the multi-layer comfortable air fiber structure. The backrest or the backrest disclosed in the present invention is prepared from the above-mentioned multi-layer comfortable air fiber structure. The seat disclosed in the present invention is formed by the above seat cushion and backrest. The present invention meets the demand for comfort by adjusting the density and hardness of the comfortable upper layer and the supportive lower layer, and meanwhile achieves the purpose of saving materials.

## Description

### TECHNICAL FIELD

The present invention relates to the technical field of seats. In particular, the present invention relates to multi-layer comfortable air fiber structures applied to backrests and seat cushions of seats, preparations method therefor, and the seat cushions, the backrests and the seats prepared therefrom.

### BACKGROUND ART

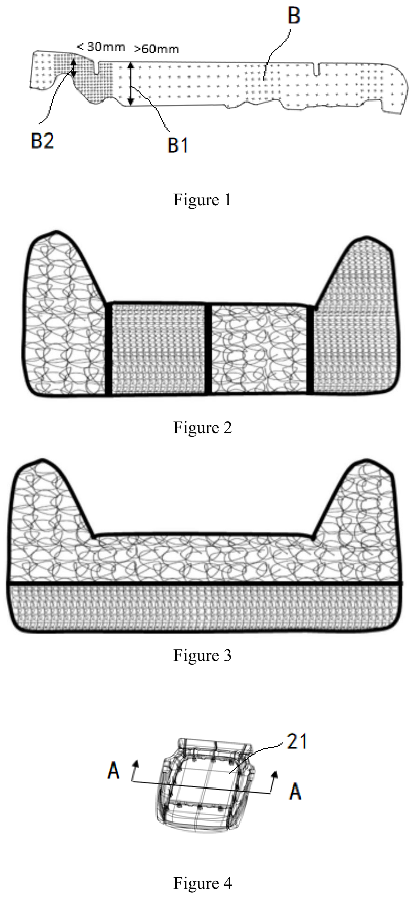

At present, the seat cushion and the backrest of a seat are generally formed by extrusion of single-layer air fiber sheets, that is, only unidirectional forming of the air fiber sheets can be controlled. Such single-layer formed products usually have the defects of high density and uneven hardness. Referring to Fig. 1, take a seat cushion as an example. If the seat cushion is prepared from single-layer air fiber sheets, the thickness at the maximum thickness span B1 needs to exceed 60mm, while the thickness at the minimum thickness span B2 is less than 30mm, with the compression amount exceeding 30mm and the hardness of the entire seat cushion being uneven.

The applicant submitted to the State Intellectual Property Office of China an application for "Thermoplastic Fiber Web Structure and Automobile Interior Part" on October 29, 2021, with the publication number of CN113930900A. In this patent application, a front seat cushion is disclosed, which comprises independently provided transverse pieces, the pieces being then melt-spliced (see Fig. 2); and the disclosed automobile interior part is a front backrest, which comprises independently provided vertical pieces, the pieces being then melt-spliced (see Fig. 3).

Although the solution proposed in the present patent can improve the flexibility of the density and hardness of the seat to a certain extent and thus improve the comfort, there is still a demand for further improvement in this regard. After continuous research by the applicant, it has been found that during the preparation process of the seat cushion and the backrest, the spinning direction of the air fibers upon forming thermoplastic fiber web sheets and the subsequent pressing process have a great influence on improving the flexibility of the overall density and hardness of the seat and the riding comfort, and therefore the present invention is proposed.

### CONTENT OF THE INVENTION

The present invention mainly aims at solving the problem that forming a seat cushion or a backrest by hot-pressing single-layer air fiber sheets at present results in inconsistent compression ratio and thus uneven density and hardness and cannot meet the demand for comfort, and also at alleviating the problem of material waste caused by excessive compression amount in the forming process of the seat cushion or the backrest by hot-pressing the single-layer air fiber sheets.

Therefore, one of the technical problems to be solved by the present invention is to provide a novel multi-layer comfortable air fiber structure.

A second technical problem to be solved by the present invention is to provide a preparation method for the multi-layer comfortable air fiber structure.

A third technical problem to be solved by the present invention is to provide a seat cushion prepared from the above multi-layer comfortable air fiber structure.

A fourth technical problem to be solved by the present invention is to provide a backrest prepared from the above multi-layer comfortable air fiber structure.

A fifth technical problem to be solved by the present invention is to provide a seat formed by the above-mentioned seat cushion and backrest.

According to a first aspect of the present invention, the multi-layer comfortable air fiber structure of the present invention includes a comfortable upper layer and a supportive lower layer, wherein the comfortable upper layer and the supportive lower layer are respectively formed by hot-pressing single-layer air fiber sheets formed from air fibers with different spinning directions, and a bottom surface of the comfortable upper layer is mechanically connected with an upper surface of the supportive lower layer.

Thermoplastic elastomer, abbreviated as TPE or TPR (the abbreviation of Thermoplastic rubber), is a material known to those skilled in the art. It is a kind of elastomer which has the elasticity of rubber at normal temperature and has plasticity at high temperature. Suitable materials for the thermoplastic elastomer include TPEE, POE, TPO, etc. The thermoplastic elastomer is structurally characterized by different resin segments and rubber segments formed by chemical bonds, wherein the resin segments form physical cross-linking points by virtue of the force between chains, and the rubber segments are highly elastic chain segments, which contribute to elasticity. The physical crosslinking of the plastic segments changes reversibly with the change of temperature, which demonstrates the plastic processing characteristics of the thermoplastic elastomer. Therefore, the thermoplastic elastomer has the physical and mechanical properties of vulcanized rubber and the processability of thermoplastic plastics, and is a polymer material between rubber and resin. In the automotive industry, such as the technology of seat, these fibrous thermoplastic fiber materials (also known as "air fibers") are usually formed into network structures in specific facilities and used as sheets for preparation of automotive accessories and interior parts such as seats.

In the context of the present invention, the "comfortable upper layer" refers to the portions of the seat cushion and the backrest of the seat that are in contact with human body under normal sitting posture and leaning against the seat cushion and the backrest, respectively, and have at least an upper surface, a bottom surface and a side surface defined between these two surfaces. The upper surface of the comfortable upper layer is the side facing the occupant's body, while the bottom surface is the side facing away from the occupant's body. For example, the comfortable upper layer of the seat cushion typically contacts buttocks and legs of the human body, while the comfortable upper layer of the backrest contacts back, head and neck of the human body. The comfortable upper layer itself may consist of one or more regions formed by air fiber sheets with different hardness or density.

In a preferred embodiment of the present invention, the comfortable upper layer may include an insert region and two bolster regions, wherein the insert region is located between the two bolster regions. The insert region may be located in the middle of the comfortable upper layer and between the two bolster regions to provide comfort for the human body, while the two bolster regions provide wrapping for the human body. Preferably, the density of the air fibers in the insert region is smaller than that of the air fibers in the bolster regions.

In the context of the present invention, the "supportive lower layer" refers to the portions of the seat cushion and the backrest of the seat that are generally not in contact with the human body under normal sitting posture, and are located on the side of the comfortable upper layer away from the human body, mainly playing the role of supporting the comfortable upper layer. The supportive lower layer has at least an upper surface, a bottom surface and a side surface defined between the two surfaces. The upper surface of the supportive lower layer is the side facing the occupant's body, while the bottom surface is the side facing away from the occupant's body. For example, the supportive lower layer of the seat cushion is typically located underneath the comfortable upper layer of the seat cushion, while the supportive lower layer of the backrest is typically located behind the comfortable upper layer of the vertical backrest. In one embodiment, the supportive lower layer may include the rest portion of the seat cushion and backrest components of the seat that is made of air fiber sheets excluding the comfortable upper layer.

In the context of the present invention, the "spinning direction" refers to the direction in which the air fibers are ejected from the machine along the nozzle upon forming the air fiber sheets in the preparation process of the comfortable upper layer, the supportive lower layer or the respective sub-regions thereof. The spinning direction determines the direction in which fibers are aligned or oriented in the sheet.

The "spinning directions being different " means that the spinning direction M of the air fibers for the comfortable upper layer and the spinning direction N of the air fibers for the supportive lower layer are not collinear or parallel.

In an advantageous embodiment of the present invention, the spinning direction M of the air fibers for the comfortable upper layer and the spinning direction N of the air fibers for the supportive lower layer form an included angle of 55° to 90°, preferably 65° to 90°, such as 75° to 85°. The "included angle" is defined in the present invention as the angle formed by the intersection (such as X-shaped intersection) of two different directions, such as two different spinning directions, and the value of this included angle is always expressed as an acute angle or a right angle less than or equal to 90°. For example, when the actual vectors of the two spinning directions are at 135°, the included angle shall be defined as 45°. Especially, if the included angle between the spinning directions M and N of the fibers for the two layers is beyond the above range, it may adversely affect the evenness of density and hardness of the prepared seat cushion and backrest of the seat, thus significantly deteriorating the riding comfort.

In a preferred embodiment of the present invention, the spinning direction M of the air fibers for the comfortable upper layer is perpendicular or substantially perpendicular to the spinning direction N of the air fibers for the supportive lower layer.

According to the present invention, after the air fibers are spun and the fiber sheets are formed, the fiber sheets need to be pressed to get the comfortable upper layer or supportive lower layer. During the pressing process, the sections of the fiber sheets of the comfortable upper layer and the supportive lower layer may be compressed and deformed to some extent due to pressure. Therefore, there may be a difference between the sections of the pressed fiber sheets and the sections of the initially unpressed fiber sheets. Adjusting the spinning direction according to the variation in the sections after pressing can reduce the adverse effect of pressing on the density and hardness of the comfortable upper layer.

In a preferred embodiment of the present invention, the spinning direction M of the air fibers for the comfortable upper layer is substantially perpendicular to the extension of the section with the least variation after pressing, and/or the spinning direction N of the air fibers for the supportive lower layer is substantially perpendicular to the extension of the section with the least variation after pressing.

In a preferred embodiment of the present invention, the spinning direction of the air fibers for the comfortable upper layer is substantially perpendicular to the extension of the maximum section after pressing, and/or the spinning direction of the air fibers for the supportive lower layer is substantially perpendicular to the extension of the maximum section after pressing.

The variation of the section may be determined by comparing the area variation of some section on the sheet before and after pressing. Preferably, the section with the least variation after pressing is the largest section after pressing.

In a more preferred embodiment, the section with the least variation after pressing is a cross section perpendicular to a longitudinal extension line of the comfortable upper layer or a cross section perpendicular to a lateral extension line of the supportive lower layer in the sheet.

Herein, the "longitudinal extension line" of the comfortable upper layer or of the supportive lower layer refers to a straight line in the comfortable upper layer or the supportive lower layer that is parallel to the line of section plane (such as sagittal plane, which is perpendicular to the ground) dividing the human body into left and right symmetrical parts when the rider is in a normal sitting posture and leans against the seat cushion and the backrest. Therefore, for the seat cushion, the longitudinal extension line of the comfortable upper layer is a line in the front-back direction relative to the occupant. It can indicate the distance between two sides in the length direction of the comfortable upper layer or the supportive lower layer of the seat cushion, and for example, in a vehicle such as a car, it can also correspond to the traveling direction of the vehicle. The cross section perpendicular to the longitudinal extension line is correspondingly a cross section in the direction from the left side to the right side (or from the right side to the left side) of the occupant, and for example, in a vehicle such as a car, it may correspond to the cross section in the width direction of the vehicle, and is generally perpendicular to the ground. For the backrest, the longitudinal extension line of the comfortable upper layer is a line in the up-and-down direction relative to the occupant, and is perpendicular to the direction from the left side to the right side (or from the right side to the left side) of the occupant. It can indicate the distance between two sides in the length direction of the comfortable upper layer or the supportive lower layer of the backrest.

Herein, the "lateral extension line" of the comfortable upper layer or the supportive lower layer refers to a straight line in the comfortable upper layer or the supportive lower layer that is perpendicular to the section plane (such as a sagittal plane, which is perpendicular to the ground) dividing the human body into left and right symmetrical parts when the rider is in the normal sitting posture and leans against the seat cushion and the backrest. Therefore, the "lateral extension line" and the "longitudinal extension line" are perpendicular to each other. Therefore, for the seat cushion or the backrest, the lateral extension line of the supportive lower layer is a line in the left-right direction (from the left side to the right side or from the right side to the left side) relative to the occupant, and for example, in a vehicle such as a car, it may correspond to the width direction of the vehicle. The cross section perpendicular to the lateral extension line is correspondingly a cross section parallel to the sagittal plane of the occupant, and for example, in a vehicle such as a car, it may correspond to the cross section in the length direction of the vehicle, and is generally perpendicular to the ground. The "lateral extension line" of the comfortable upper layer or the supportive lower layer can indicate the distance between their two sides in the width direction.

Therefore, in another embodiment, the spinning direction of the air fibers for the comfortable upper layer may be substantially parallel to its longitudinal extension line, and/or the spinning direction of the air fibers for the supportive lower layer may be substantially parallel to its lateral extension line.

In another exemplary embodiment, the spinning direction of the air fibers for the comfortable upper layer of the seat cushion may be substantially parallel to the X direction, the spinning direction of the air fibers for the comfortable upper layer of the backrest may be substantially parallel to the Z direction, and/or the spinning direction of the air fibers for the supportive lower layer of the seat cushion and the backrest may be substantially parallel to the Y direction. In this embodiment, the X, Y and Z directions are defined as follows: in the case that the occupant is under normal sitting posture and leans against the seat cushion and the backrest, and the seat cushion and the backrest are substantially vertical to each other, the Z direction refers to the height direction of the vehicle, that is, the direction perpendicular to the ground; the Y direction refers to the width direction of the vehicle, which is perpendicular to both the X and the Z directions; and the X direction refers to the length direction or travelling direction of the vehicle, which is perpendicular to both the Y and the Z directions.

Here, it may be appreciated by those skilled in the art that the "width direction" and the "length direction" related to the seat cushion or the backrest as mentioned above are actually relative to the direction of the occupant or the vehicle, and do not depend on the actual length value. In other words, for example, the actual distance between two sides in the width direction of the seat cushion may be greater than the actual distance between two sides in the length direction.

In the context of the present invention, the term "substantially perpendicular" indicates that the included angle between two lines or planes (such as the included angle between M and N) is 75° to 90°, preferably 80° or 85° to 90°, such as 88°, always calculated in terms of the intersecting acute included angle. For example, this can mean that the spinning direction is deflected by no more than 15° or 10°, for example, not more than 8°, 5°, 3° or 1°, with reference to the vertical line of a certain section.

In addition, it is clear to those skilled in the art that said "cross section" may also be understood as "normal section", which is different from "oblique section".

In the context of the present invention, the term "substantially parallel" indicates that the included angle between two lines or planes is 15° or 10° to 0°, preferably from 5° to 0°, for example, less than 2°, always calculated in terms of the intersecting acute included angle.

In a preferred embodiment of the present invention, the insert region of the comfortable upper layer has a thickness of 10-50 mm.

In a preferred embodiment of the present invention, the insert region of the comfortable upper layer has a density of 30-50kg/m³.

In a preferred embodiment of the present invention, the bolster regions of the comfortable upper layer have a density of 40-70kg/m³.

In a preferred embodiment of the present invention, the supportive lower layer has a thickness of 10-50mm.

In a preferred embodiment of the present invention, the supportive lower layer has a density of 40-70kg/m³.

In a preferred embodiment of the present invention, the density and hardness of the comfortable upper layer and the supportive lower layer are adjustable. In an advantageous embodiment, this adjustment can be achieved, for example, by adjusting the height of the nozzle of the spinning device relative to the water level or the ejection speed, by changing the thickness of the monofilament, or by adjusting the drawing speed, the density of the holes in a spinneret or the softness and hardness of the material itself, etc. In addition, such adjustment can also be achieved during the hot-pressing process. For example, by increasing the thickness difference between the sheets and the final product, the compression amount is increased, and thus the hardness and density of the product can be increased; conversely, the smaller the thickness difference and the smaller the compression amount is, and the closer is the density and hardness of the product to those of the sheets.

According to the present invention, after the comfortable upper layer and the supportive lower layer have been prepared respectively, the bottom surface of the comfortable upper layer needs to be connected with the upper surface of the supportive lower layer by mechanical connection.

In a preferred embodiment of the present invention, said mechanical connection includes connecting the bottom surface of the comfortable upper layer with the upper surface of the supportive lower layer by one or any two of the following means: hanging steel wires and C-rings, hook-and-loop fasteners, felted cloth, magnetic powder sheets, binders, pins and insert sleeves, elastomers, direct snapping, annular hooks and surface-covering molding strips, and reinforced connection layers and heat-ironing.

In a preferred embodiment of the present invention, the connection means with the felted cloth includes: integrally forming the supportive lower layer by in-mold hot pressing with porous adhesive-backed felted cloth, and bonding the supportive lower layer with the comfortable upper layer through a porous binder layer by means of heating and pre-pressing.

In a preferred embodiment of the present invention, reinforced connection layers are provided at the connection of the comfortable upper layer and the supportive lower layer.

A preparation method for the multi-layer comfortable air fiber structure in the present invention includes the following steps:
Step 1: continuously spinning air fibers in a spinning direction M to form an air fiber sheet for a comfortable upper layer, and then hot-pressing the air fiber sheet for the comfortable upper layer to form the comfortable upper layer;
Step 2: continuously spinning air fibers in a spinning direction N to form an air fiber sheet for a supportive lower layer, and then hot-pressing the air fiber sheet for the supportive lower layer to form the supportive lower layer;
Step 3, connecting a bottom surface of the comfortable upper layer with an upper surface of the supportive lower layer by mechanical connection to form the multi-layer comfortable air fiber structure,
wherein the spinning directions M and N are different.

In a preferred embodiment of the present invention, the spinning direction M of the air fibers for the comfortable upper layer and the spinning direction N of the air fibers for the supportive lower layer form an included angle of 55° to 90°, preferably 65° to 90°, such as 75° to 85°.

In a preferred embodiment of the present invention, the method includes the following step:
Step 1' : continuously spinning air fibers in a spinning direction, which is substantially perpendicular to the direction of the maximum section of the comfortable upper layer, to form an air fiber sheet for a comfortable upper layer, and then hot-pressing the air fiber sheet for the comfortable upper layer to form the comfortable upper layer.

In a preferred embodiment of the present invention, the method includes the following step:
Step 2' : continuously spinning air fibers in a spinning direction, which is substantially perpendicular to the direction of the maximum section of the supportive lower layer, to form an air fiber sheet for a supportive lower layer, and then hot-pressing the air fiber sheet for the supportive lower layer to form the supportive lower layer.

The seat cushion of the present invention is prepared from the above-mentioned multi-layer comfortable air fiber structure.

The backrest of the present invention is prepared from the above-mentioned multi-layer comfortable air fiber structure.

The seat of the present invention is formed by the seat cushion and the backrest as described above.

Finally, the present invention also relates to a vehicle including the seat as described above, and the vehicle is preferably a motor vehicle such as a car, a bus or a truck, a train, an airplane or a spacecraft.

With the adoption of the aforesaid technical solution, the comfortable upper layer and the supportive lower layer in the seat cushion and the backrest of the seat are respectively prepared by hot pressing the air fiber sheets formed from the air fibers with different spinning directions, and the bottom surface of the comfortable upper layer is mechanically connected with the upper surface of the supportive lower layer. In this way, the present invention meets the demand for comfort by adjusting the density and hardness of the comfortable upper layer and the supportive lower layer, and meanwhile achieves the purpose of saving materials.

### BRIEF DESCRIPTION OF THE DRAWINGS

Fig. 1 is a schematic sectional view of an existing seat cushion prepared by hot-pressing single-layer air fiber sheets.
Fig. 2 is a schematic structural view of a front seat cushion in a China patent for invention "Thermoplastic Fiber Web Structure and Automobile Interior Part" disclosed with publication number of CN113930900A.
Fig. 3 is a schematic structural view of a front backrest in a China patent for invention "Thermoplastic Fiber Web Structure and Automobile Interior Part" disclosed with publication number of CN113930900A.
Fig. 4 is a schematic structural view of a comfortable upper layer in the seat cushion formed by hot pressing single-layer air fiber sheets according to the present invention.
Fig. 5 is a sectional view taken along the line A-A of Fig. 4 (showing the maximum contour in the Y-Z plane of the comfortable upper layer).
Fig. 6 is a schematic perspective view of the comfortable upper layer in the seat cushion formed by hot pressing single-layer air fiber sheets according to the present invention.
Fig. 7 is a schematic structural view of a supportive lower layer in the seat cushion formed by hot pressing single-layer air fiber sheets according to the present invention.
Fig. 8 is a sectional view taken along the line A-A of Fig. 7 (showing the maximum contour in the X-Z plane of the supportive lower layer).
Fig. 9 is a schematic perspective view of the supportive lower layer in the seat cushion formed by hot pressing single-layer air fiber sheets according to the present invention.
Fig. 10 is a schematic structural view of a comfortable upper layer in the backrest formed by hot pressing single-layer air fiber sheets according to the present invention.
Fig. 11 is a sectional view taken along the line A-A of Fig. 10 (showing the maximum contour in the X-Y plane of the comfortable upper layer).
Fig. 12 is a schematic perspective view of the comfortable upper layer in the backrest formed by hot pressing single-layer air fiber sheets according to the present invention.
Fig. 13 is a schematic structural view of a supportive lower layer in the backrest formed by hot pressing single-layer air fiber sheets according to the present invention.
Fig. 14 is a sectional view taken along the line A-A of Fig. 13 (showing the maximum contour in the X-Z plane of the supportive lower layer).
Fig. 15 is a schematic perspective view of the supportive lower layer in the backrest formed by hot pressing single-layer air fiber sheets according to the present invention.
Fig. 16 is a schematic sectional view of the seat cushion formed from the multi-layer comfortable air fiber structure of the present invention.
Fig. 17 is a schematic sectional view of the backrest formed from the multi-layer comfortable air fiber structure of the present invention.
Fig. 18 is a schematic sectional view of embodiment 1 of the present invention.
Fig. 19 is a schematic sectional view of embodiment 2 of the present invention.
Fig. 20 is a schematic sectional view of embodiment 3 of the present invention.
Fig. 21 is a schematic sectional view of embodiment 4 of the present invention.
Fig. 22 is a schematic sectional view of embodiment 5 of the present invention.
Fig. 23 is a schematic view showing the connection between the comfortable upper layer and the supportive lower layer by using annular hooks, surface-covering molding strips and reinforced connection layers for forming the multi-layer comfortable air fiber structure of the present invention.
Fig. 24 is a schematic view showing the connection between the comfortable upper layer and the supportive lower layer by direct snapping for forming the multi-layer comfortable air fiber structure of the present invention.
Figs. 25a and 25b are schematic views showing the connection between the comfortable upper layer and the supportive lower layer by use of reinforced connection layers and by heat-ironing for forming the multi-layer comfortable air fiber structure of the present invention.
Fig. 26 is a schematic view showing the connecting means of integrally forming the supporting layer and porous adhesive-backed felted cloth by hot pressing and then bonding with the comfortable layer with porous binders, for forming the multi-layer comfortable air fiber structure of the present invention.
Fig. 27 is a schematic view showing the connecting means with elastomers for forming the multi-layer comfortable air fiber structure of the present invention.
Fig. 28 is a schematic view of the seat cushion in which the multi-layer comfortable air fiber structure of the present invention is formed by the connecting means with binders, annular hooks and adhesive-film felted cloth.
Fig. 29 is a schematic view of the backrest in which the multi-layer comfortable air fiber structure of the present invention is formed by the connecting means with binders, annular hooks and adhesive-film felted cloth.
Fig. 30 is a schematic view of the seat cushion in which the multi-layer comfortable air fiber structure of the present invention is formed by the connecting means with binders and adhesive-film felted cloth.
Fig. 31 is a schematic view of the backrest in which the multi-layer comfortable air fiber structure of the present invention is formed by the connecting means with binders and adhesive-film felted cloth.
Fig. 32 is a schematic structural view of a first annular hook of the present invention.
Fig. 33 is a schematic structural view of a second annular hook of the present invention.
Fig. 34 is a schematic structural view of a third annular hook of the present invention.
Fig. 35 is a schematic structural view of a fourth annular hook of the present invention.
Fig. 36 is a schematic structural view of a fifth annular hook of the present invention.
Fig. 37 is a schematic structural view of a sixth annular hook of the present invention.
Fig. 38 is a schematic view of the X, Y and Z directions mentioned in the specific embodiments of the present invention.

### EMBODIMENTS

The present invention will be further described with reference to the attached drawings and specific embodiments.

Referring to Figs. 4 to 17, the multi-layer comfortable air fiber structure shown in the figures may be used to prepare a seat cushion 20 and a backrest 10, each of which is divided into a comfortable upper layer 21, 11, and a supportive lower layer 22, 12.

The comfortable upper layer 21, 11 and the supportive lower layer 22, 12 are respectively prepared by hot pressing single-layer air fiber sheets formed from air fibers with different spinning directions, and a bottom surface of comfortable upper layer 21, 11 is mechanically connected with an upper surface of the supportive lower layer 22, 12.

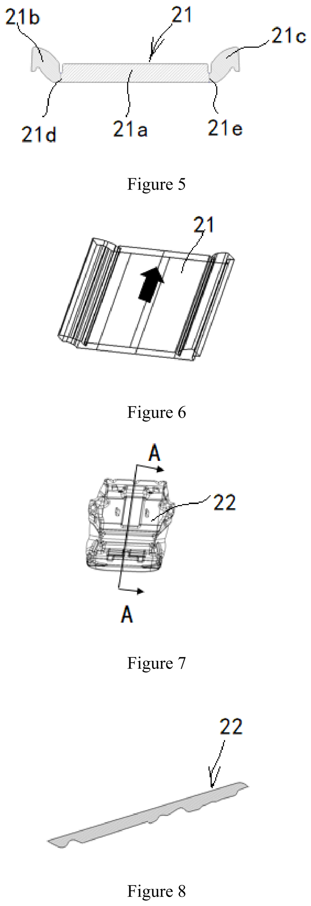

Referring to Figs. 4 to 6, the spinning direction of the air fibers for the comfortable upper layer 21 of the seat cushion 20 is perpendicular to the direction of the section with the least variation (i.e. the maximum section) after pressing, namely, being perpendicular to the plane of Fig. 5. In other words, it is perpendicular to the direction of the maximum contour in the Y-Z plane of the comfortable upper layer 21 of the seat cushion 20, namely, being the X direction, so as to reach the minimum compression amount (that is, saving materials most). If the spinning is carried out along the plane of Fig. 5, that is, along the Y or Z direction, there may also be air fibers in the cavities in the insert region 21a and the two bolster regions 21b and 21c. Upon pressing, these air fibers have nowhere to go, but can only be pressed into the insert region 21a and the two bolster regions 21b and 21c, and there may possibly be more air fibers in the insert region 21a. This may make the insert region 21a high in density and hardness, thus affecting the riding comfort and leading to unnecessary material waste.

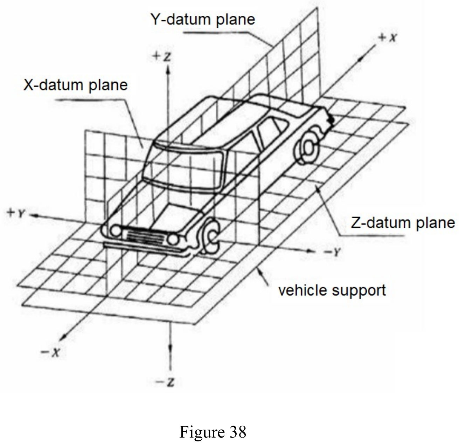

As shown in Fig. 38, described in the specific embodiments of the present invention is the seat cushion and the backrest of a seat in normal mounting and use state in a car, where the seat cushion and the backrest are substantially vertical to each other. The X, Y and Z directions involved in the embodiments form a spatial rectangular coordinate system, where the Z direction refers to the height direction of the car, that is, the direction perpendicular to the ground; the Y direction refers to the width direction of the car, which is perpendicular to both the X and the Z directions; and the X direction refers to the length direction of the car, which is perpendicular to both the Y and the Z directions.

The comfortable upper layer 21 of the seat cushion 20 is divided into one insert region 21a and two bolster regions 21b and 21c, wherein the insert region 21a is located between the two bolster regions 21b and 21c and is a portion in front contact with occupant's buttocks, and the bolster regions 21b and 21c are protrusions of the seat cushion 20 and used to fix the position of the occupant's buttocks relative to the seat cushion 20 and limit the occupant's buttocks.

The density of the air fibers in the insert region 21a is different from that in the two bolster regions 21b and 21c. The density in the insert region 21a is 30-50kg/m³ and may be adjusted within this range, and the thickness of the insert region 21a is 10-50mm and may be adjusted within this range. The density of the bolster regions 21b, 21c is 40-70kg/m³ and may be adjusted within this range. The adjustment to the hardness can be achieved by adjustment of the density.

After the comfortable upper layer 21 of the seat cushion 20 has been formed by pressing, surface-covering hangers 21d and 21e are pressed between the inert area 21a and the two bolster regions 21b and 21c.

Referring to Figs.7 to 9, the spinning direction of the air fibers for the supportive lower layer 22 of the seat cushion 20 is also perpendicular to the direction of the section with the least variation (i.e. the maximum section) after pressing, namely, the plane of Fig. 8. In other words, it is perpendicular to the direction of the maximum contour in the X-Z plane of the supportive lower layer 22 of the seat cushion 20, namely being the Y direction, so as to reach the minimum compression amount (that is, saving materials most). The density of the supportive lower layer 22 of the seat cushion 20 is 40-70kg/m³ and may be adjusted within this range. The adjustment to the hardness can be achieved by adjustment of the density.

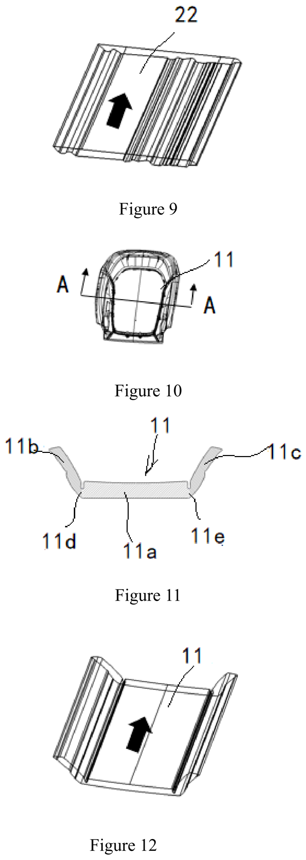

Referring to Figs. 10 to 12, the spinning direction of the air fibers for the comfortable upper layer 11 of the backrest 10 is perpendicular to the direction of the section with the least variation (i.e. the maximum section) after pressing, namely, the plane of Fig. 11. In other words, it is perpendicular to the direction of the maximum contour in the X-Y plane of the comfortable upper layer 11 of the backrest 10, namely, being the Z direction, so as to reach the minimum compression amount (that is, saving materials most). Likewise, if the spinning is carried out along the plane of Fig. 11, there may also be air fibers in the cavities in the insert region 11a and the two bolster regions 11b, 11c. Upon pressing, these air fibers have nowhere to go, but can only be pressed into the insert region 11a and the two bolster regions 11b, 11c, and there may possibly be more air fibers in the insert region 11a. This may make the insert region 11a high in density and hardness, thus affecting the riding comfort, and leading to unnecessary material waste.

The comfortable upper layer 11 of the backrest 10 is divided into one insert region 11a and two bolster regions 11b, 11c, wherein the insert region 11a is located between the two bolster regions 11b and 11c and is a portion in front contact with occupant's back, and the bolster regions 11b, 11c are protrusions of the backrest 10 and used to fix the position of the occupant's back relative to the backrest 10 and limit the occupant's back.

The density of the air fibers in the insert region 11a is different from that of the air fibers in the two bolster regions 11b, 11c. The density in the insert region 11a is 30-50kg/m³ and may be adjusted within this range, and the thickness of the insert region 11a is 10-50mm and may be adjusted within this range. The density in the bolster regions 11b, 11c is 40-70kg/m³ and may be adjusted within this range. The adjustment to the hardness can be achieved by adjustment of the density.

After the comfortable upper layer 11 of the backrest 10 has been formed by pressing, surface-covering hangers 11d and 11e are pressed between the inert area 11a and the two bolster regions 11b, 11c.

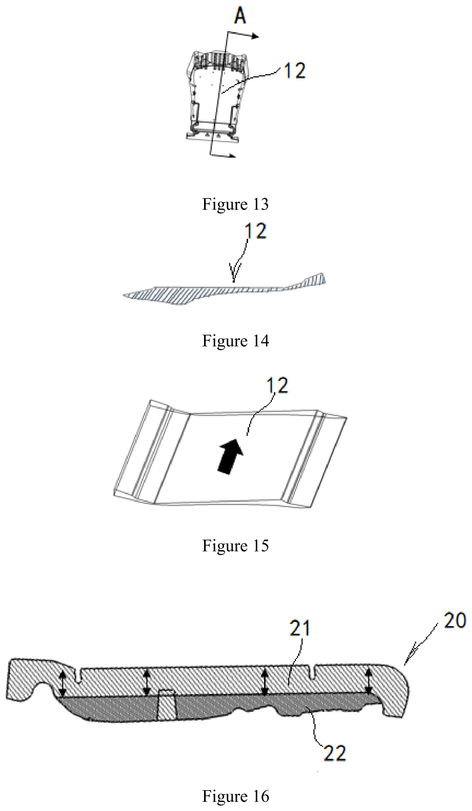

Referring to Figs.13 to 15, the spinning direction of the air fibers for the supportive lower layer 12 of the backrest 10 is also perpendicular to the direction of the section with less variation after pressing, preferably the direction of the maximum section, namely, the plane of Fig. 14. In other words, it is perpendicular to the direction of the maximum contour in the X-Z plane of the supportive lower layer 12 of the backrest 10, namely being the Y direction, so as to reach the minimum compression amount (that is, saving materials most). The density of the supportive lower layer 12 of the backrest 10 is 40-70kg/m³ and may be adjusted within this range. The adjustment to the hardness can be achieved by adjustment of the density.

In the prior art, the thickness of the thickest area formed by hot-pressing single-layer air fiber sheets is taken as the thickness of the single-layer air fiber sheet, so for a relatively thin product, there may be a great compression amount, and the density after thermoforming may reach more than 105 kg/m³. However, in the present invention, at least two layers of air fiber sheets are hot pressed, so that the insert region of the prepared comfortable upper layer 11, 21 and the entire supportive lower layer 12, 22 have consistent and small compression amount, and have a density of below 80kg/m³ after thermoforming. For example, the density of the comfortable upper layer 11, 21 is 30-50kg/m³, and the density of the supportive lower layer is 40-70kg/m³.

In a specific embodiment according to the present invention, sheets made of air fibers whose spinning directions M and N are at 90° are used to prepare double-layered comfortable upper layer and supportive lower layer respectively, which are then compared with a single-layer formed product, with their respective measurement data being listed in Table 1.

In this embodiment, the density of each sheet formed from the air fibers is maintained at about 50kg/m³. The formed part of the seat cushion or the backrest in single-layer form contains a single sheet, in which the spinning direction of the air fibers is definite; whereas the formed part of the seat cushion or the backrest in double-layer form including a comfortable upper layer and a supportive lower layer contains two sheets, wherein the respective spinning directions M and N of the two sheets are different and at 90 degrees to each other. The sheet is pressed to obtain the formed part in single-layer form or double-layer form. The volume of the sheet before pressing, the volume of each molded part after pressing, the density after pressing and the weight after pressing are measured in a conventional manner, and these data are listed in Table 1. In addition, the weight reduction rate is also calculated according to the following formula: Weight reduction rate (%) = (weight of the double-layer molded part after pressing - weight of the single-layer molded part after pressing) / weight of the single-layer molded part after pressing

As can be seen from the following table, compared with the seat cushion 20 or the backrest 10 formed by hot pressing single-layer air fiber sheets, the density and weight are reduced by more than 25%, the compression amount is consistent, and the hardness evenness of the comfortable upper layers 11, 21 and the supportive lower layers 12, 22 can also be ensured.

**Table 1**

| | volume of the sheet before pressing | volume of the molded part after pressing | density after pressing | weight after pressing | weight reduction rate |
|---|---|---|---|---|---|
| single layer | 0.021m³ | 0.012m³ | 87.5kg/m³ | 1.05kg | 27.60% |
| comfortable upper layer of the double layers | 0.0104m³ | 0.0088m³ | 63.3 kg/m³ | 0.76kg | |
| supportive lower layer of the double layers | 0.0048m³ | 0.0032m³ | | | |
| Note: by taking the double-layer form, the volume of the product after pressing is unchanged compared with the single-layer form. The total volume of the sheets decreases, and the total density and weight decrease. | | | | | |

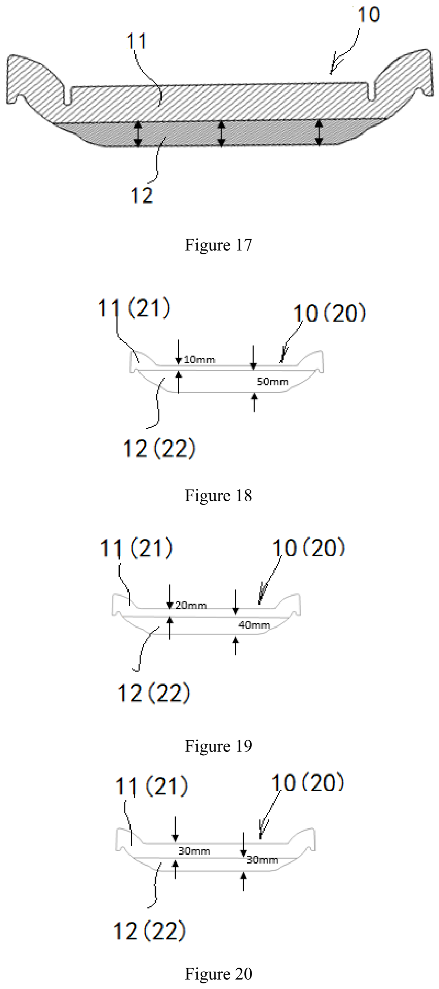

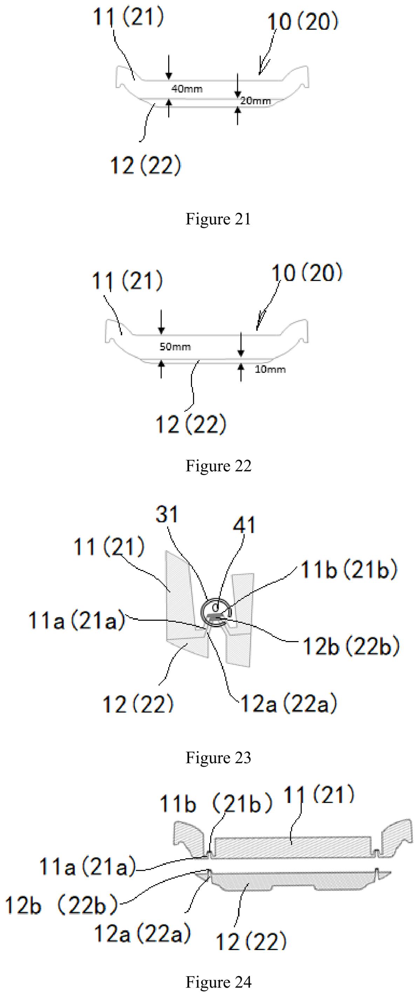

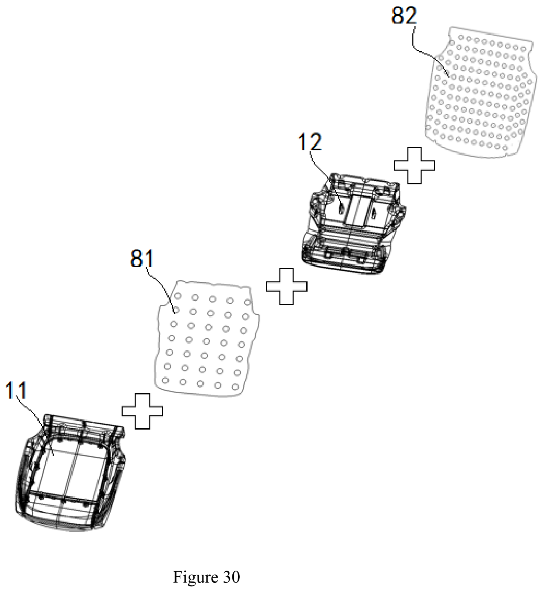

Referring to Figs. 18 to 22, the comfortable upper layer 11, 21 has a thickness of 10-50mm, such as 10mm shown in Fig. 18, 20mm shown in Fig. 19, 30mm shown in Fig. 20, 40mm shown in Fig. 21 and 50mm shown in Fig. 22. The supportive lower layer 12, 22 has a thickness of 10-50mm, such as 50mm as shown in Fig. 18, 40mm as shown in Fig. 19, 30mm as shown in Fig. 20, 20mm as shown in Fig. 21 and 10mm as shown in Fig. 22.

The density and hardness of the comfortable upper layer 11, 21 and the supportive lower layer 12, 22 are adjustable.

The bottom surface of the comfortable upper layer 11, 21 and the upper surface of the supportive lower layer 12, 22 are connected by one or any two of the following means: hanging steel wires and C-rings, hook-and-loop fasteners, felted cloth, magnetic powder sheets, binders, pins and insert sleeves, elastomers, direct snapping, annular hooks and surface-covering molding strips, and reinforced connection layers and heat-ironing, specifically as following:
Referring to Fig. 23, the comfortable upper layer 11, 21 and the supportive lower layer 12, 22 are respectively molded with dies to create interlocking structures 11a, 12a, 21a, 22a to meet the interconnection between the comfortable upper layer 11, 21 and the supportive lower layer 12, 22, and to create reinforced connection layers 11b, 21b, 12b, 22b with a thickness of 0.4-4mm, and then a surface-covering molding strip 41 is connected to the two reinforced connection layers 11b, 21b, 12b and 22b by use of a conventional annular hook 31. This connection means is purely physical, can reduce the assembly process and improve the assembly strength, is environmentally friendly, has no extra VOC emission, and does not affect the original performance of the seat cushion or the backrest.

Referring to Fig. 24, the comfortable upper layer 11, 21 and the supportive lower layer 12, 22 are respectively molded with dies to create interlocking structures 11a, 12a, 21a, 22a to meet the interconnection between the comfortable upper layer 11, 21 and the supportive lower layer 12, 22, and to create reinforced connection layers 11b, 21b, 12b, 22b with a thickness of 0.4-4mm. When assembling, it only needs to insert the interlocking structures 12a and 22a into the interlocking structures 11a and 21a. This connection means is purely physical, can reduce the assembly process and improve the assembly strength, is environmentally friendly, has no extra VOC emission, and does not affect the original performance of the seat cushion or the backrest.

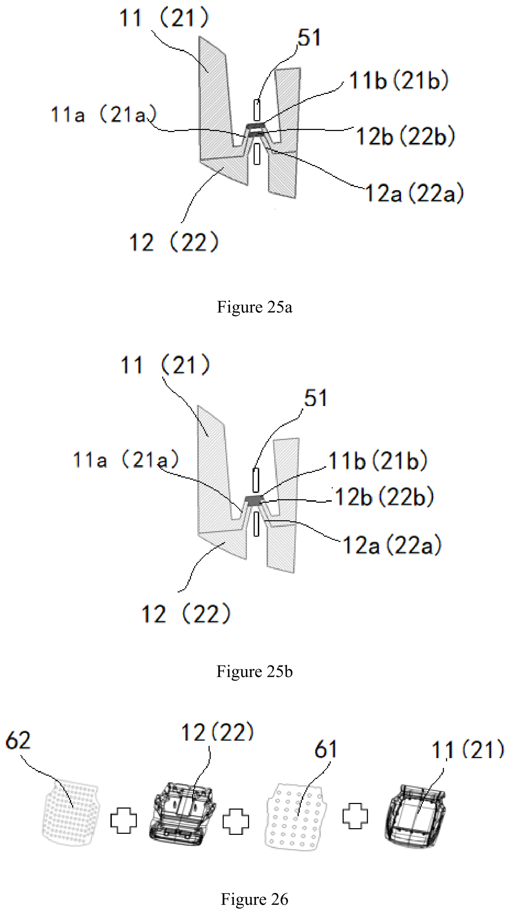

Referring to Figs. 25a and 25b, the comfortable upper layer 11, 21 and the supportive lower layer 12, 22 are respectively molded with dies to create interlocking structures 11a, 12a, 21a, 22a to meet the interconnection between the comfortable upper layer 11, 21 and the supportive lower layer 12, 22, and to create reinforced connection layers 11b, 21b, 12b, 22b with a thickness of 0.4-4mm. Then, a heat-ironing machine 51 is adopted to heat to 210-250°C, thus melting the reinforced connection layers 11b, 21b, 12b and 22b to connect them together. This can eliminate the use of components such as the molding strips and the annular hooks, reduce the assembly process, and meanwhile ensure the connection strength.

Referring to Fig. 26, the supportive lower layer 12, 22 and the porous adhesive-backed felted cloth 62 are integrally formed by in-mold hot pressing, and are bonded together with the comfortable upper layer 11, 21 through porous binders 61 by means of heating and pre-pressing. This enables the seat cushion or the backrest to maintain air permeability. The use of the porous binders 61 makes the connection between the comfortable upper layer 11, 21 and the supportive lower layer 12, 22 as well as the porous adhesive-backed felted cloth 62 more stable, and ensures the air permeability.

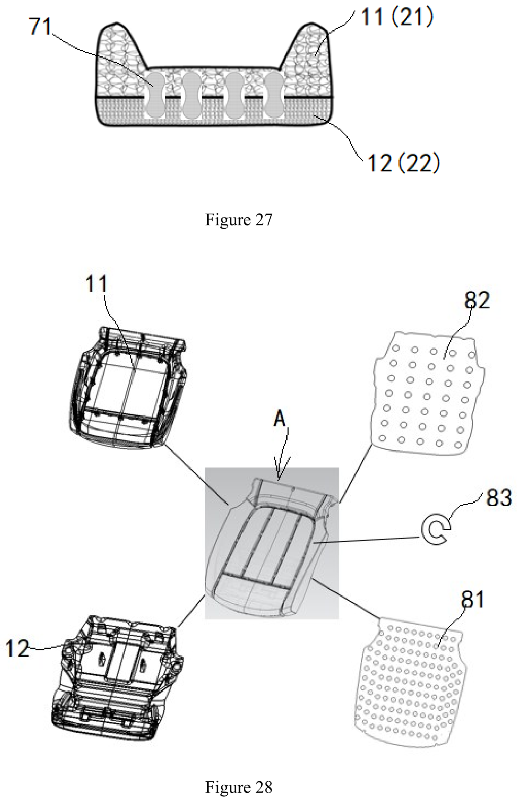

Referring to Fig. 27, elastomers 71 are implanted into the comfortable upper layer 11, 21 and the supportive lower layer 12, 22 in an embedded manner by use of air-foamed filamentary structures. The elastomer 71 not only improves the overall supporting performance, elasticity and compression fatigue deformation resistance of the seat cushion or the backrest, but also serves as a connection between the comfortable upper layer 11, 21 and the supportive lower layer 12, 22.

Referring to Fig. 28, a seat cushion A is assembled from the comfortable upper layer 11, the supportive lower layer 12, porous adhesive-film felted cloth 81, a porous binder 82 and an annular hook 83.

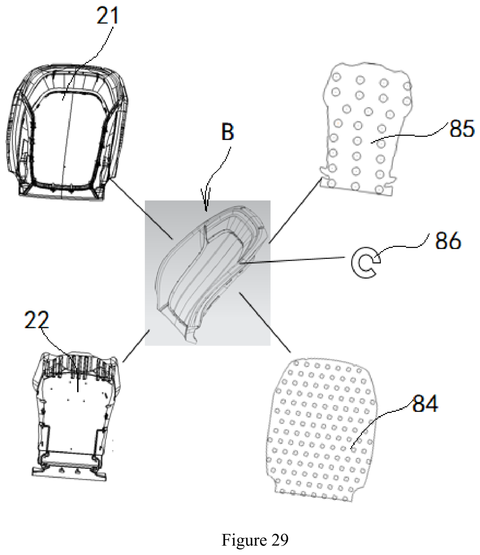

Referring to Fig. 29, a backrest B is assembled from the comfortable upper layer 21, the supportive lower layer 22, porous adhesive-film felted cloth 84, a porous binder 85 and an annular hook 86.

Referring to Fig. 30, the seat cushion is assembled from the comfortable upper layer 11, the supportive lower layer 12, the porous adhesive-film felted cloth 82 and the porous binder 81.

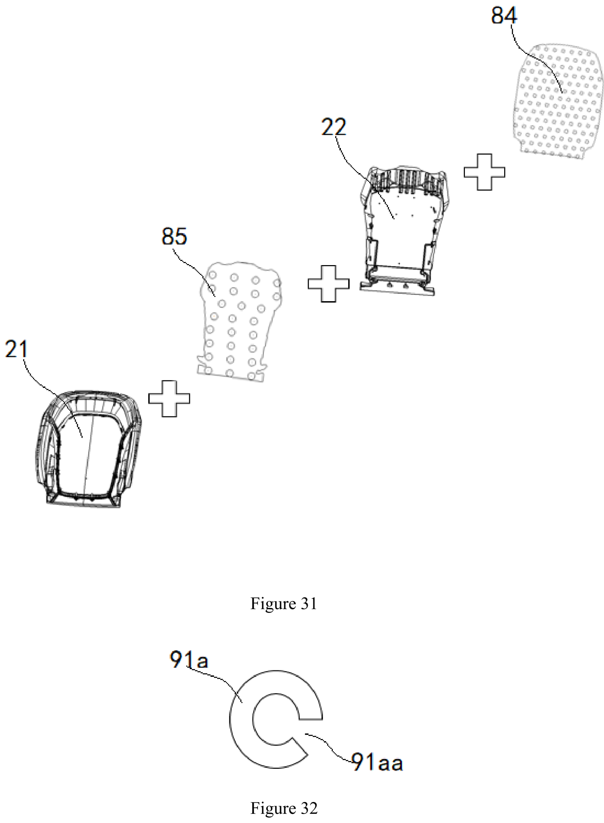

Referring to Fig. 31, the backrest is assembled from the comfortable upper layer 21, the supportive lower layer 22, the porous adhesive-film felted cloth 84 and the porous binder 85.

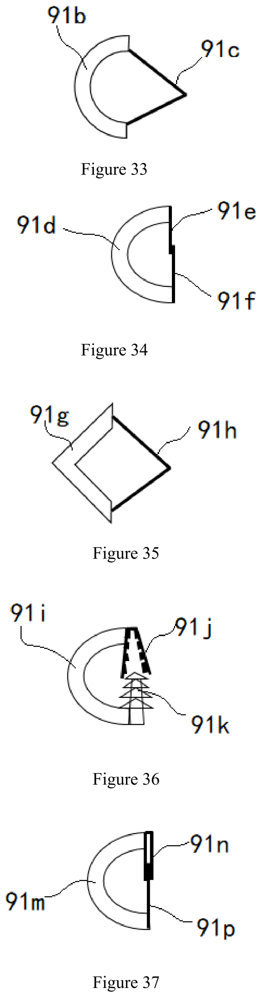

Referring to Fig. 32, the opening 91aa of the annular hook 91a is less than 90°. Referring to Fig. 33, a triangular clip 91c is mounted at both ends of the annular hook 91b. Referring to Fig. 34, two ends of the annular hook 91d are provided with straps 91e and 91f, respectively, which are in overlapped with each other. Referring to Fig. 35, the annular hook 91g is triangular, and a triangular clip 91h is mounted at both ends of the annular hook 91g. Referring to Fig. 36, two ends of the annular hook 91i are equipped with an insert sleeve 91j and a pin 91k respectively, and barbs are provided on both the insert sleeve 91j and the pin 91k; and upon assembling, the pin 91k is inserted into the insert sleeve 91j. Referring to Fig. 37, two ends of the annular hook 91m are equipped with an insert sleeve 91n and a pin 91p respectively, and upon assembling, the pin 91p is inserted into the insert sleeve 91n.

The triangular clip 91c, the straps 91e and 91f, the triangular clip 91c, the triangular clip 91h, the insert sleeve 91j, the pin 91k, the insert sleeve 91n and the pin 91p as mentioned above can be made of metal materials, PP plastics, ABS plastics and PA plastics.

## Claims

1. A multi-layer comfortable air fiber structure, comprising a comfortable upper layer and a supportive lower layer, wherein the comfortable upper layer and the supportive lower layer are respectively prepared by hot pressing single-layer air fiber sheets formed from air fibers with different spinning directions, and a bottom surface of the comfortable upper layer is mechanically connected with an upper surface of the supportive lower layer.

2. The multi-layer comfortable air fiber structure according to claim 1, **characterized in that** a spinning direction M of the air fibers for the comfortable upper layer and a spinning direction N of the air fibers for the supportive lower layer form an included angle of 55° to 90°, preferably 65° to 90°, such as 75° to 85°.

3. The multi-layer comfortable air fiber structure according to claim 2, **characterized in that** the spinning direction M of the air fibers for the comfortable upper layer is substantially perpendicular to extension of a section with the least variation after pressing, and/or the spinning direction N of the air fibers for the supportive lower layer is substantially perpendicular to extension of a section with the least variation after pressing.

4. The multi-layer comfortable air fiber structure according to claim 3, **characterized in that** the spinning direction of the air fibers for the comfortable upper layer is substantially perpendicular to extension of the maximum section after pressing, and/or the spinning direction of the air fibers for the supportive lower layer is substantially perpendicular to extension of the maximum section after pressing.

5. The multi-layer comfortable air fiber structure according to claim 1, **characterized in that** the comfortable upper layer comprises one insert region and two bolster regions, wherein the insert region is located between the two bolster regions; preferably, density of the air fibers in the insert region is lower than that of the air fibers in the bolster regions.

6. The multi-layer comfortable air fiber structure according to claim 5, **characterized in that** the insert region of the comfortable upper layer has a thickness of 10-50 mm.

7. The multi-layer comfortable air fiber structure according to claim 5, **characterized in that** the insert region of the comfortable upper layer has a density of 30-50kg/ₘ³.

8. The multi-layer comfortable air fiber structure according to claim 5, **characterized in that** the bolster regions of the comfortable upper layer have a density of 40-70kg/m³.

9. The multi-layer comfortable air fiber structure according to claim 5, **characterized in that** the supportive lower layer has a thickness of 10-50mm.

10. The multi-layer comfortable air fiber structure according to claim 5, **characterized in that** the supportive lower layer has a density of 40-70kg/m³.

11. The multi-layer comfortable air fiber structure according to claim 1, **characterized in that** the density and hardness of the comfortable upper layer and the supportive lower layer are adjustable.

12. The multi-layer comfortable air fiber structure according to claim 1, **characterized in that** the mechanical connection specifically comprises connecting the bottom surface of the comfortable upper layer with the upper surface of the supportive lower layer by one or any two of the following means: hanging steel wires and C-rings, hook-and-loop fasteners, felted cloth, magnetic powder sheets, binders, pins and insert sleeves, elastomers, direct snapping, annular hooks and surface-covering molding strips, and reinforced connection layers and heat-ironing.

13. The multi-layer comfortable air fiber structure according to claim 12, **characterized in that** the connection means with the felted cloth is specifically as following: the supportive lower layer are integrally formed by in-mold hot pressing with porous adhesive-backed felted cloth, and then bonded with the comfortable upper layer through a porous binder layer by means of heating and pre-pressing.

14. The multi-layer comfortable air fiber structure according to claim 12 or 13, **characterized in that** reinforced connection layers are provided at the connection between the comfortable upper layer and the supportive lower layer.

15. A preparation method for the multi-layer comfortable air fiber structure according to any one of claims 1 to 14, **characterized by** comprising the following steps:
Step 1: continuously spinning air fibers in a spinning direction M to form an air fiber sheet for a comfortable upper layer, and then hot-pressing the air fiber sheet for the comfortable upper layer to form the comfortable upper layer;
Step 2: continuously spinning air fibers in a spinning direction N to form an air fiber sheet for a supportive lower layer, and then hot-pressing the air fiber sheet for the supportive lower layer to form the supportive lower layer;
Step 3: connecting a bottom surface of the comfortable upper layer with an upper surface of the supportive lower layer by mechanical connection to form the multi-layer comfortable air fiber structure,
wherein the spinning directions M and N are different.

16. A seat cushion, **characterized in that** it is prepared from the multi-layer comfortable air fiber structure according to any one of claims 1 to 14.

17. A backrest, **characterized in that** it is prepared from the multi-layer comfortable air fiber structure according to any one of claims 1 to 14.

18. A seat, **characterized in that** it is formed by the seat cushion according to claim 16 and the backrest according to claim 17.

19. A vehicle, comprising the seat according to claim 18, the vehicle preferably being a motor vehicle such as a car, a bus or a truck, a train, an airplane or a spacecraft.
